## Europäisches Patentamt

## European Patent Office

## Office européen des brevets

(11) Veröffentlichungsnummer: **0 059 384**
**B1**

(12) **EUROPÄISCHE PATENTSCHRIFT**

(45) Veröffentlichungstag der Patentschrift:
06.02.85

(51) Int. Cl.⁴: **A 01 K 9/00**

(21) Anmeldenummer: **82101258.0**

(22) Anmeldetag: **19.02.82**

(54) Tränkeautomat für Säugetiere.

(30) Priorität: **26.02.81 DE 3107349**
**17.07.81 DE 3128318**

(43) Veröffentlichungstag der Anmeldung:
**08.09.82 Patentblatt 82/36**

(45) Bekanntmachung des Hinweises auf die Patenterteilung:
**06.02.85 Patentblatt 85/6**

(84) Benannte Vertragsstaaten:
**AT BE CH DE FR GB IT LI NL SE**

(56) Entgegenhaltungen:
**DE - A - 1 557 243**
**DE - A - 1 607 148**
**DE - B - 1 657 063**
**DE - U - 7 918 836**

(73) Patentinhaber: **Förster, Martin, Dipl.-Ing.,**
**Gerwigstrasse 27, D-7707 Engen (DE)**

(72) Erfinder: **Förster, Martin, Dipl.-Ing., Gerwigstrasse 27,**
**D-7707 Engen (DE)**

(74) Vertreter: **Engelhardt, Guido, Dipl.-Ing.,**
**Montafonstrasse 35 Postfach 1350,**
**D-7990 Friedrichshafen 1 (DE)**

ACTORUM AG

## Beschreibung

Die Erfindung bezieht sich auf einen Tränkeautomat für Säugetiere, der aus einem Mixer zur Zubereitung eines flüssigen Futtermittels, beispielsweise von Milch, die in diesem aus einem aufsetzbaren Behälter dosiert zugeführten Milchpulver und Wasser gemischt wird, und einer Saugstelle, die mittels einer Saugleitung mit dem Mixer verbunden ist, besteht, wobei in dem über das obere Flüssigkeitsniveau des in dem Mixer befindlichen Mediums geführten Bereich der Saugleitung ein Anschluss vorgesehen ist, an den eine Zweigleitung angeschlossen ist, die ein zur Unterbrechung des Futtermittelstromes steuerbares Absperrventil enthält, mittels dem die Zweigleitung zu einem andersartigen Medium hin zu öffnen oder abzuschliessen ist und der insbesondere zur Aufzucht von Kälbern in vorteilhafter Weise verwendbar ist.

Ein Tränkeautomat dieser Art ist durch das DE-U-7 918 836 bekannt. Die Saugleitung ist bei diesem Gerät, das sich in der Praxis gut bewährt hat, zur Unterbrechung des Futtermittelstromes mittels des Absperrventils an die Atmosphäre anschliessbar, so dass ein Tier, nachdem der Futtermittelstrom durch Öffnen des Absperrventils unterbrochen ist, Luft ansaugt. Dadurch wird das Tier mitunter jedoch nicht sofort veranlasst, die Saugstelle zu verlassen, da es erwartet, dass irgendwann wiederum Milch in der Saugleitung ist. Andere Tiere können somit während dieser Zeit nicht zur Saugstelle gelangen, so dass die Fütterung oftmals sich über einen langen Zeitraum erstreckt und dadurch beeinträchtigt wird.

Es ist daher Aufgabe der Erfindung, den Tränkeautomat der vorgenannten Gattung in der Weise zu verbessern, dass ein Tier, sobald dessen vorgegebene Futtermittelmenge aufgebraucht ist, die Saugstelle sofort freiwillig verlässt, so dass eine Fütterung ohne Zeitverzögerung erfolgen und ein Tränkeautomat von einer grossen Anzahl von Tieren benutzt werden kann. Der dazu erforderliche Bauaufwand soll gering gehalten werden, dennoch soll eine sichere Funktion gewährleistet sein. Darüber hinaus soll auch der Verwendungsbereich des Gerätes erheblich erweitert werden, indem, ohne dass bauliche Veränderungen vorzunehmen sind, auch andere Medien zusammen mit dem Futtermittelstrom oder allein dem Tier verabreicht werden können.

Gemäss der Erfindung wird dies dadurch erreicht, dass das Absperrventil über die Zweigleitung an einen Vorratsbehälter für das andersartige, der Saugstelle zuführbare flüssige Medium angeschlossen ist, dessen Flüssigkeitsniveau im Normalbetrieb über dem Flüssigkeitsniveau des in dem Mixer befindlichen Mediums liegt, und dass die Saugleitung mit einer in Strömungsrichtung vor dem Anschluss der Zweigleitung angeordneten Rücklaufsperre versehen ist.

Weist das Absperrventil einen Auslasskanal auf, ist es angebracht, diesen über eine weitere Leitung an den Vorratsbehälter anzuschliessen.

Die Rücklaufsperre kann hierbei in vorteilhafter Ausgestaltung als etwa bis in Höhe des Absperrventils bzw. über die Saugstelle hinaus geführter Rohrbogen, als Winkelstück oder dgl. ausgebildet sein, wobei es angebracht ist, die Rücklaufsperre unmittelbar vor der Saugstelle anzuordnen.

Um mit Sicherheit auszuschliessen, dass ein Flüssigkeitsausgleich zwischen den beiden Medien stattfindet, ist es des weiteren angebracht, die Saugleitung mit einem zwischen dem Anschluss der Zweigleitung an diese und der Rücklaufsperre angeordneten, beispielsweise durch eine Leitungserweiterung gebildeten Sammelraum zu versehen. Bei einer derartigen Ausgestaltung reisst nämlich der aus dem Mixer angesaugte Flüssigkeitsstrom, sobald das Tier nicht mehr saugt, sofort ab.

Nach einer andersartigen Ausgestaltung ist es aber auch möglich, dazu in die Saugleitung ein Rückschlagventil, vorzugsweise ein vertikal angeordnetes Kugelrückschlagventil, einzusetzen.

Zusätzlich zu der als Rohrbogen oder Winkelstück ausgebildeten Rücklaufsperre kann in die Saugleitung vorzugsweise unterhalb des Niveaus des in dem Mixer befindlichen Mediums ein Rückschlagventil eingesetzt sein, damit in dieser das Medium nicht vollständig zurückfliesst und das Ansaugen somit erleichtert wird. Zu dem gleichen Zweck kann die an den Vorratsbehälter angeschlossene Zweigleitung mit einem vorzugsweise unterhalb des Flüssigkeitsniveaus des in diesem befindlichen Mediums angeordneten Rückschlagventil ausgestattet sein.

Um stets eine einwandfreie Funktion des Tränkeautomaten zu gewährleisten, sollte das höchste Flüssigkeitsniveau des Vorratsbehälters nur geringfügig unterhalb der Saugstelle liegen.

Angebracht ist es ferner, um einen selbsttätigen Flüssigkeitsausgleich zu vermeiden, die Saugstelle mit einem mit einer Öffnung ausgestatteten Sauger zu versehen.

Zur Veränderung der Menge des aus dem Vorratsbehälter angesaugten Mediums ist es des weiteren zweckmässig, in die an diesen angeschlossene weitere Leitung ein Regulierventil einzusetzen. Der Vorratsbehälter kann zu dem gleichen Zweck aber auch höhenverstellbar angeordnet werden.

Vorteilhaft ist es auch, den Vorratsbehälter als Mixer auszubilden und/oder mit einer Heizvorrichtung und/oder mit einem Dosiergerät zu versehen, so dass dieser vielseitig einsetzbar ist.

Der Mixer, der Vorratsbehälter sowie das Absperrventil können in einfacher Weise zu einer Baueinheit zusammengefasst und in einem gemeinsamen geschlossenen Gehäuse angeordnet werden.

Der gemäss der Erfindung ausgebildete Tränkeautomat ist nicht nur einfach in der konstruktiven Ausgestaltung und ermöglicht eine Unterbrechung des Futtermittelstromes, ohne dass dieser dazu über ein Absperrventil geleitet wird, sondern es ist auch gewährleistet, dass das Tier unmittelbar nach Unterbrechung des Futtermittelstromes die Saugstelle verlässt. Wird nämlich der Sauger an einen Vorratsbehälter angeschlossen, in dem sich beispielsweise kaltes Wasser befindet, so wird das Tier, sobald dieses ungewohnte Medium anstelle von Milch angesaugt wird, sofort freiwillig die Saugstelle verlassen. Durch die Anordnung des Vorratsbehälters sowie die vorgesehene Rücklaufsperre ist sichergestellt, dass bei geöffnetem Absperrventil das Medium aus dem Vorratsbehälter angesaugt werden kann und dass ein Überlauf aus diesem in den Mixer ausgeschlossen ist. Verzögerungen und Störungen bei der Fütterung von Tieren werden auf diese Weise vermieden, vielmehr ist das gemäss der Erfindung ausgebildete Gerät für eine grosse Anzahl von Tieren in vorteilhafter Weise einsetzbar.

Das aus dem Vorratsbehälter angesaugte Medium kann aber nicht nur dazu dienen, das Tier anzuregen, freiwillig die Saugstelle zu verlassen, sondern in dem Vorratsbehälter können auch Vitamin- oder Arzneimittellösungen oder andere Nährstofflösungen bereitgehalten und diese können dosiert zusammen mit dem Futtermittelstrom oder getrennt dem Tier zugeführt werden. Bauliche Veränderungen sind dazu nicht erforderlich; dies kann vielmehr leicht mittels des Regulierventils und/oder des Absperrventils bewerkstelligt werden. Somit ist ein vielseitiger Einsatz des erfindungsgemäss ausgebildeten Gerätes gegeben.

In der Zeichnung ist ein Ausführungsbeispiel des gemäss der Erfindung ausgebildeten Tränkeautomaten dargestellt und nachfolgend im einzelnen erläutert. Hierbei zeigen, jeweils in schematischer Darstellung:

Fig. 1 den aus Mixer, Saugstelle, Absperrventil und Vorratsbehälter bestehenden Tränkeautomaten,

Fig. 2 das Gerät nach Fig. 1 mit einer andersartig ausgebildeten, zwischen dem Vorratsbehälter und dem Mixer angeordneten Rücklaufsperre,

Fig. 3 eine andersartige Ausgestaltung des Tränkeautomaten nach Fig. 1 und

Fig. 4 den Tränkeautomaten nach Fig. 3 mit einer als Winkelstück ausgebildeten Rücklaufsperre und einem dieser vorgeschalteten Sammelraum.

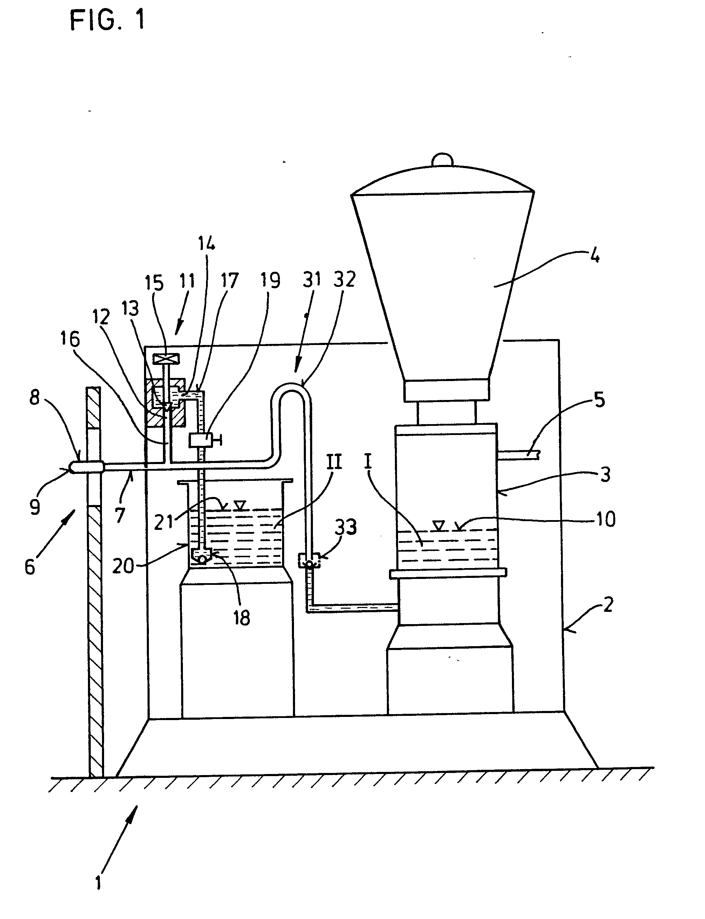

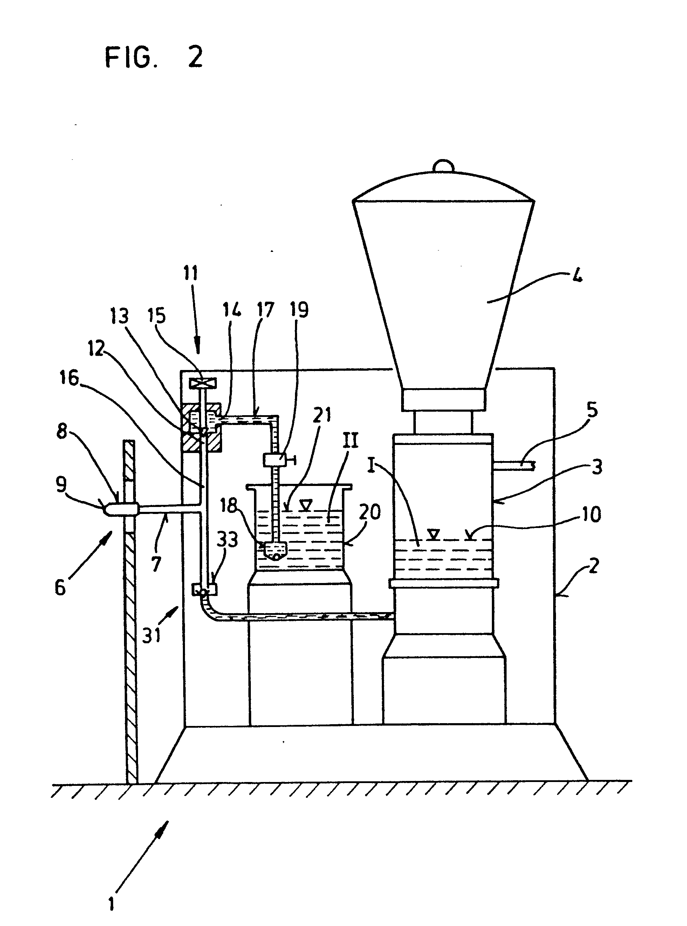

Der in den Figuren 1 und 2 jeweils mit 1 bezeichnete Tränkeautomat für Säugetiere besteht im wesentlichen aus einem Mixer 3, auf den ein Pulverbehälter 4 aufgesetzt und an den eine Wasserleitung 5 angeschlossen ist, einer Saugstelle 6, die über eine Saugleitung 7 mit dem Mixer 3 verbunden ist sowie einem Absperrventil 11 und einem weiteren Vorratsbehälter 20. Der Mixer 3, das Absperrventil 11 und der Vorratsbehälter 20 sowie die diese verbindenden Leitungen sind hierbei in einem geschlossenen Gehäuse 2 angeordnet, lediglich die Saugstelle 6 ist aus diesem herausgeführt.

Um dem an der Saugstelle 6 saugenden Tier nur eine vorbestimmte Futtermittelmenge, beispielsweise Milch, die in dem Mixer 3 aus in dem Behälter 4 gelagerten Milchpulver und über die Wasserleitung 5 zugeführten Wasser gemischt wird, zur Verfügung zu stellen, ist die Saugleitung 7 über das obere mit 10 bezeichnete Flüssigkeitsniveau des in dem Mixer 3 befindlichen Mediums I geführt und in diesem Bereich ist mittels einer Zweigleitung 16 das Absperrventil 11 an die Saugleitung 7 angeschlossen. Das Absperrventil 11 ist hierbei derart ausgebildet, dass während des Saugens der Kanal 12 mittels eines Ventilkörpers 13 angeschlossen ist, so dass das Tier Futtermittel aus dem Mixer 3 ansaugt.

Wird jedoch der Ventilkörper 13 angehoben, indem ein mit diesem verbundenes Schaltglied 15, z.B. ein Zeitschaltrelais oder ein durch einen Responder, den das Tier trägt, einschaltbaren Empfänger betätigt wird, so ist der Kanal 12 über einen Auslasskanal 14 sowie eine Leitung 17 mit dem Vorratsbehälter 20 verbunden. Da jedoch das mit 21 bezeichnete Niveau des in diesem befindlichen Mediums II höher liegt als das Niveau 10 des Mediums I in dem Mixer 3, wird sofort der Futtermittelstrom in der Saugleitung 7 unterbrochen und das Tier saugt bei geöffnetem Absperrventil 11 das Medium II aus dem Vorratsbehälter 20 an. Befindet sich in dem Vorratsbehälter 20 beispielsweise kaltes Wasser, wird das Tier veranlasst, sofort die Saugstelle 6 zu verlassen, so dass andere Tiere den Tränkeautomaten 1 benutzen können. Auf diese Weise ist mit einfachen Mitteln und ohne dass das Ventil 11 von dem Futtermittel durchströmt wird, gewährleistet, dass z.B. nur eine bestimmte Zeit das Ansaugen von Futtermittel möglich und somit eine genaue Dosierung der einem Tier zur Verfügung gestellten Futtermittelmenge gegeben ist. Damit bei geöffnetem Absperrventil 11 kein Flüssigkeitsausgleich stattfindet, d.h. das Medium II aus dem höher angeordneten Vorratsbehälter 20 nicht über die Saugleitung 7 in den Mixer 3 fliesst, ist diese mit einer Rücklaufsperre 31 versehen. Die Rücklaufsperre 31 kann, wie dies in Fig. 1 dargestellt ist, als Rohrbogen 32, der bis in die Höhe des Absperrventils 11 geführt ist, ausgebildet werden; es kann aber auch gemäss Fig. 2 in die Saugleitung 7 ein Rückschlagventil 33 eingesetzt werden. Ausserdem ist die Saugstelle 6 mit einem Sauger 8 ausgestattet, der eine Öffnung 9 aufweist. Dadurch gelangt, sobald das Tier die Saugstelle 6 verlässt, Luft in die Saugleitung 7. Ein Flüssigkeitsausgleich ist damit zuverlässig vermieden.

Damit die Saugleitung 7 sowie die das Absperrventil 11 mit dem Vorratsbehälter 20 verbindende Leitung 17 nach einem Fütterungsvorgang nicht bis auf das Niveau 10 bzw. 21 des Mediums I und II leerlaufen, sind die Leitungen 7 und 17 jeweils mit einem Rückschlagventil 18 bzw. 33 ausgestattet, die unterhalb des zugeordneten Niveaus angeordnet sind. Durch die zurückströmende Flüssigkeit werden die Ventile 18 und 33 sofort geschlossen, so dass über diesen eine Flüssigkeitssäule erhalten bleibt und das erneute Ansaugen somit erleichtert wird.

In die Leitung 17 ist des weiteren ein Regulierventil 19 eingesetzt, um die diese durchströmende Flüssigkeitsmenge gegebenenfalls, sofern sich in dem Vorratsbehälter 20 beispielsweise eine Nährstofflösung befindet, auf einfache Weise verändern zu können.

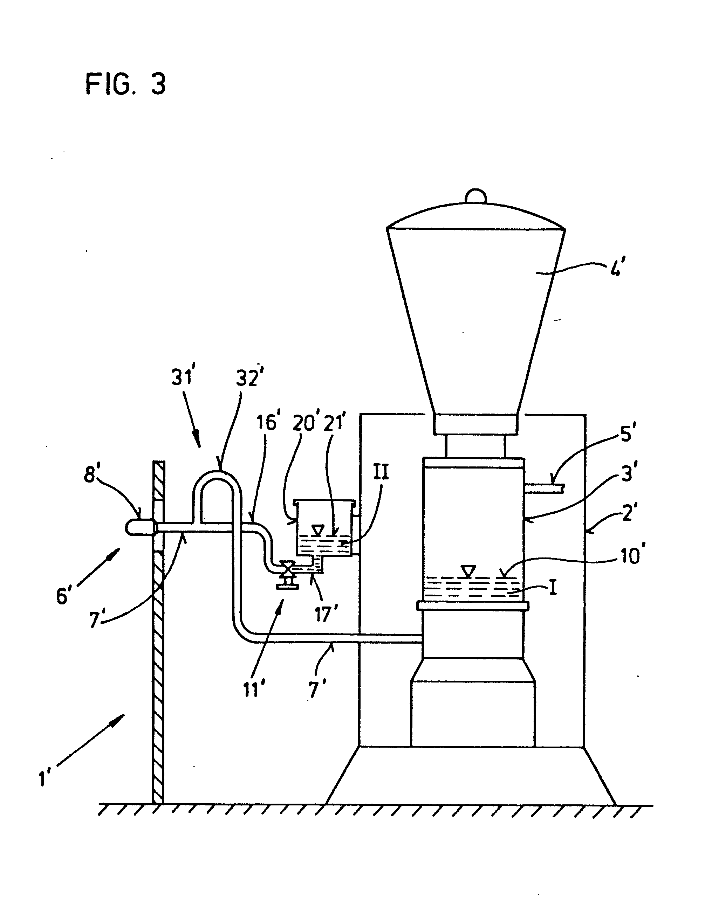

Bei dem Tränkeautomaten 1' nach Fig. 3, der ebenfalls aus einem in einem Gehäuse 2' eingesetzten Mixer 3', dem Wasser über eine Wasserleitung 5' zugeführt wird, und einen auf diesen aufgesetzten Pulverbehälter 4' sowie einer Saugstelle 6' besteht, ist an die diese mit dem Mixer 3' verbindende Saugleitung 7' eine Zweigleitung 16' angeschlossen, in die ein steuerbares Absperrventil 11' eingesetzt ist. Über eine weitere Leitung 17' ist die Zweigleitung 16' mit dem Vorratsbehälter 20', der ein andersartiges Medium II, beispielsweise kaltes Wasser, enthält, angeschlossen. Das Absperrventil 11' ist somit unmittelbar in die Zweigleitung 16', 17' mittels der der Saugstelle 6' das Medium II zugeführt werden kann, eingesetzt.

Die Saugleitung 7' ist ebenfalls mit einer als Rohrbogen 32' ausgestatteten Rücklaufsperre 31' versehen, damit ein Flüssigkeitsausgleich nicht stattfinden kann. Durch die Rücklaufsperre 31' wird des weiteren verhindert, zumal das Flüssigkeitsniveau 21' des Vorratsbehälters 20' nur geringfügig unterhalb der Saugstelle 6' liegt, dass bei geöffnetem Absperrventil 11' Milch angesaugt wird.

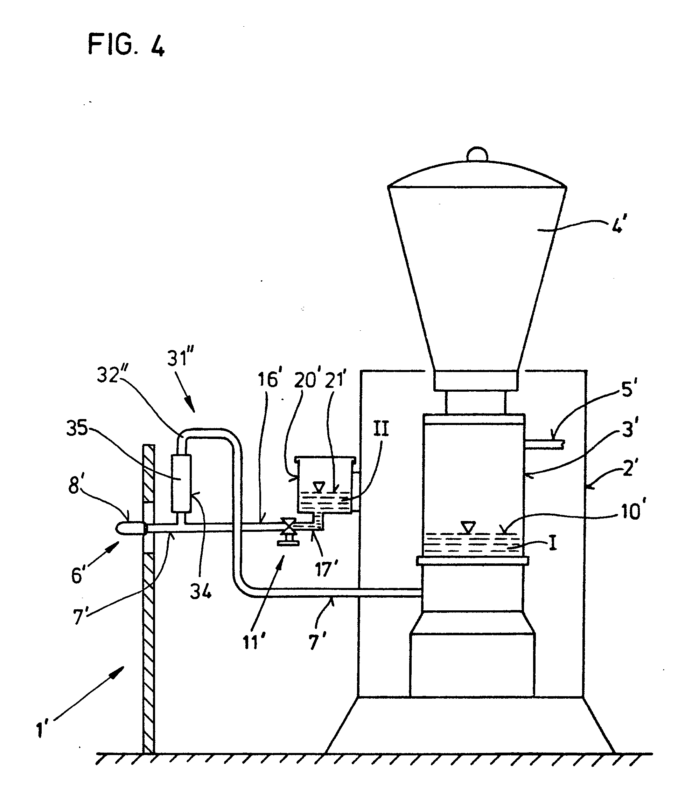

Bei der Ausgestaltung nach Fig. 4 ist in die Saugleitung 7' ein Rohrbogen 32'' als Rücklaufsperre 31'' eingesetzt und dieser ist ein Sammelraum 35 vorgeschaltet, der durch eine Leitungserweiterung 34 gebildet ist. Durch den Sammelraum 35 ist sichergestellt, dass ein Flüssigkeitsausgleich zwischen den Medien I und II in keinem Fall stattfindet, da der Flüssigkeitsstrom in der Saugleitung 7', sobald ein Tier nicht mehr saugt, sofort abreisst.

## Patentansprüche

1. Tränkeautomat (1; 1') für Säugetiere, insbesondere für Kälber, bestehend aus einem Mixer (3; 3') zur Zubereitung eines flüssigen Futtermittels, beispielsweise von Milch, die in diesem aus einem aufsetzbaren Behälter (4; 4') dosiert zugeführten Milchpulver und Wasser gemischt wird, und einer Saugstelle (6; 6'), die mittels einer Saugleitung (7, 7') mit dem Mixer (3; 3') verbunden ist, wobei in dem über das obere Flüssigkeitsniveau (10; 10') des in dem Mixer (3; 3') befindlichen Mediums geführten Bereich der Saugleitung (7; 7') ein Anschluss vorgesehen ist, an den eine Zweigleitung (16; 16') angeschlossen ist, die ein zur Unterbrechung des Futtermittelstromes steuerbares Absperrventil (11; 11') enthält, mittels dem die Zweigleitung (16; 16') zu einem andersartigen Medium hin zu öffnen oder abzuschliessen ist, dadurch gekennzeichnet, dass das Absperrventil (11; 11') über die Zweigleitung (16; 16') an einen Vorratsbehälter (20; 20') für das andersartige, der Saugstelle (6; 6') zuführbare flüssige Medium (II) angeschlossen ist, dessen Flüssigkeitsniveau (21; 21') im Normalbetrieb über dem Flüssigkeitsniveau (10; 10') des in dem Mixer (3; 3') befindlichen Mediums (I) liegt, und dass die Saugleitung (7; 7') mit einer in Strömungsrichtung vor dem Anschluss der Zweigleitung (16; 16') angeordneten Rücklaufsperre (31; 31'; 31'') versehen ist.

2. Tränkeautomat nach Anspruch 1, dadurch gekennzeichnet, dass das Absperrventil (11) einen Auslasskanal (14) aufweist, der über eine weitere Leitung (17; 17') an den Vorratsbehälter (20; 20') angeschlossen ist,

3. Tränkeautomat nach Anspruch 1 oder 2, dadurch gekennzeichnet, dass die Rücklaufsperre (31; 31'; 31'') als etwa bis in Höhe des Absperrventils (11) bzw. über die Saugstelle (6') hinaus geführter Rohrbogen (32; 32'), als Winkelstück (32'') oder dgl, ausgebildet ist.

4. Tränkeautomat nach Anspruch 3, dadurch gekennzeichnet, dass die Rücklaufsperre (31') unmittelbar vor der Saugstelle (6') angeordnet ist.

5. Tränkeautomat nach Anspruch 3 oder 4, dadurch gekennzeichnet, dass die Saugleitung (7') mit einem zwischen dem Anschluss der Zweigleitung (16') an diese und der Rücklaufsperre (31'') angeordneten, beispielsweise durch eine Leitungserweiterung (34) gebildeten Sammelraum (35) versehen ist.

6. Tränkeautomat nach Anspruch 1 oder 2, dadurch gekennzeichnet, dass die Rücklaufsperre (31) als in die Saugleitung (7) eingesetztes Rückschlagventil (33), vorzugsweise als vertikal angeordnetes Kugelrückschlagventil, ausgebildet ist.

7. Tränkeautomat nach einem oder mehreren der Ansprüche 1 bis 6, dadurch gekennzeichnet, dass zusätzlich zu der als Rohrbogen (32) oder Winkelstück (32'') ausgebildeten Rücklaufsperre (31) in die Saugleitung (7) vorzugsweise unterhalb des Niveaus (10) des in dem Mixer (3) befindlichen Mediums (I) ein Rückschlagventil (3) eingesetzt ist.

8. Tränkeautomat nach einem oder mehreren der Ansprüche 1 bis 7, dadurch gekennzeichnet, dass die an den Vorratsbehälter (20) angeschlossene Zweigleitung (16) mit einem vorzugsweise unterhalb des Flüssigkeitsniveaus (21) des in diesem befindlichen Mediums (II) angeordneten Rückschlagventil (18) versehen ist.

9. Tränkeautomat nach einem oder mehreren der Ansprüche 1 bis 8, dadurch gekennzeichnet, dass das höchste Flüssigkeitsniveau (21') des Vorratsbehälters (20') unterhalb der Saugstelle (6') liegt.

10. Tränkeautomat nach einem oder mehreren der Ansprüche 1 bis 9, dadurch gekennzeichnet, dass die Saugstelle (6) mit einem mit einer Öffnung (9) ausgestatteten Sauger (8) versehen ist.

11. Tränkeautomat nach einem oder mehreren der Ansprüche 1 bis 10, dadurch gekennzeichnet, dass in die an den Vorratsbehälter (20) angeschlossene weitere Leitung (17) zwischen diesem und dem Absperrventil (11) ein Regulierventil (19) eingesetzt ist.

12. Tränkeautomat nach einem oder mehreren der Ansprüche 1 bis 11, dadurch gekennzeichnet, dass der Vorratsbehälter (20; 20') höhenverstellbar angeordnet ist.

13. Tränkeautomat nach einem oder mehreren der Ansprüche 1 bis 12, dadurch gekennzeichnet, dass der Vorratsbehälter (20) als Mixer ausgebildet und/oder mit einer Heizvorrichtung und/oder mit einem Dosiergerät versehen ist.

14. Tränkeautomat nach einem oder mehreren der Ansprüche 1 bis 13, dadurch gekennzeichnet, dass der Mixer (3 ), der Vorratsbehälter (20) sowie das Absperrventil (11) zu einer Baueinheit zusammengefasst und in einem gemeinsamen, geschlossenen Gehäuse (2) angeordnet sind.

## Claims

1. Automatic watering device (1; 1') for mammals, particularly for calfs, consisting of a mixing apparatus for preparing a liquid feeding-stuff, for example milk, which comes from an attachable container (4; 4') and is mixed from measured out and fed powdered milk and water, and further consisting of a suction cup (6; 6') connected to the mixing apparatus (3; 3') via a suction line (7; 7') whereby in the region of the suction line (7; 7') above the upper liquid level (10; 10') of the medium in the mixing apparatus (3;

3') a connector is provided to which a sub-line (16; 16') is connected containing a controllable valve (11; 11') to cut off the feeding-stuff, by means of which valve the sub-line leading to another medium may be closed or opened, characterized in that the controllable valve (11; 11') is connected to a supply container (20; 20') for the other liquid medium (II) via the sub-line (16; 16') which liquid medium may be fed to the suction cup, the level (21; 21') of which other liquid medium is higher than that level (10; 10') of the medium (I) in the normal mode being in the mixing apparatus and that the suction line (7; 7') has a reverse flow preventing device (31; 31') provided, in fluid direction, before the connection of the sub-line (16; 16')

2. Automatic watering device of claim 1, characterized in that the controllable valve (11) has an outlet channel (14), which in turn is connected to the supply container (20+ 20') via a further line (17; 17').

3. Automatic watering device of claim 1 or 2, characterized in that the reverse flow preventing device 31; 31'; 31'') is designed as a bow (32; 32') of a line, an angle piece or the like leading about up to the controllable valve's (11) hight or over the suction cup (6') respectively.

4. Automatic watering device of claim 3, characterized in that reverse flow preventing device (31') is located just before the suction cup (6').

5. Automatic watering device of claim 3 or 4, characterized in that the suction line (7') is provided with a collecting chamber (35) for example established by a wider line part (34) located between the connection of the sub-line (16') to the suction line and the reverse flow preventing device (31'').

6. Automatic watering device of claim 1 or 2, characterized in that the reverse flow preventing device (31) is designed as a reverse flow preventing valve (33), preferably as a vertically located reverse flow preventing ball valve.

7. Automatic watering device of one or more of the claims 1 to 6, characterized in that additionally to the reverse flow preventing device (31) designed as a bow (32) of a line or an angle piece (32'') a reverse flow preventing valve (33) is incorporated into the suction line (7) preferably below the level (10) of the medium (I) being in the mixing apparatus (3).

8. Automatic watering device of one or more of the claims 1 to 7, characterized in that the sub-line (16) connected to the supply container (20) is provided with a reverse flow preventing valve (18) preferably located below the fluid level (21) of the medium (II) being in the supply container.

9. Automatic watering device of one or more of the claims 1 to 8, characterized in that the highest level (21') of the fluid is lower than the suction cup (6').

10. Automatic watering device of one or more of the claims 1 to 9, characterized in that the suction cup (6) is provided with a suction piece (8) having an opening (9).

11. Automatic watering device of one or more of the claims 1 to 10, characterized in that into the additional line (17) connected to the supply container (20) between the container and the controllable valve (11) a further adjustable valve (19) is incorporated.

12. Automatic watering device of one or more of the claims 1 to 11, characterized in that the supply container (20; 20') is vertically adjustable.

13. Automatic watering device of one or more of the claims 1 to 12, characterized in that the supply container (20) is designed as a mixing apparatus and/or has a heating device and/or a dispenser.

14. Automatic watering device of one or more of the claims 1 to 13, characterized in that the mixing apparatus (3), the supply container (20) and the controllable valve (11) as well are combined as one unit and are located in one common closed housing (2).

**Revendications**

1. Abreuvoir automatique (1; 1') pour bestiaux, en particulier pour les veaux, consistant en un mélangeur (3; 3') servant à la préparation d'un aliment liquide, par exemple de lait, qui result du mélange dans ce dernier de lait en poudre dosé provenant d'un réservoir démontable (4; 4') et d'eau, d'un point d'abreuvage (6; 6'), qui est raccordé au mélangeur (3; 3') par une conduite d'aspiration (7; 7') un raccord étant prévu dans la partie de la conduite d'aspiration (7; 7') se trouvant au dessus du niveau (10; 10') du mélange liquide contenu dans le mélangeur (3; 3') où est branché une conduite de dérivation (16; 16') pourvue d'une vanne de fermeture (11; 11') réglable servant à coupler le débit en aliment, grâce à laquelle la conduite de dérivation (16; 16') peut être mise en communication avec un mélange de composition différente ou bien privé de celui-ci, caractérisé par le fait que, la vanne de fermeture (11; 11') est raccordée par l'intermédiaire de la conduite de dérivation (16; 16') à un réservoir (20; 20') contenant le mélange de composition différente (II) qui peut être acheminé au point d'abreuvage (6; 6'), le niveau (21; 21') de mélange dans ce réservoir en fonctionnement normal étant situé au dessus du niveau (10; 10') du mélange (I) se trouvant dans le mélangeur (3; 3') et que la conduite d'aspiration (7; 7') est équipée d'une valve antiretour (31; 31'; 31'') placée avant le raccord de la conduite de dérivation (16; 16') par rapport à la direction d'écoulement.

2. Abreuvoir automatique selon revendication 1, caractérisé par le fait que, la vanne de fermeture (11) présente un canal d'écoulement (14), qui est raccordé au réservoir (20; 20') par l'intermédiaire d'une conduite supplémentaire (17; 17').

3. Abreuvoir automatique selon revendication 1 ou 2, caractérisé par le fait que, la valve antiretour (31; 31'; 31'') étant formée d'un tuyau coudé (32; 32') allant pratiquement à la même hauteur que la vanne de fermeture (11) et plus haut que le point d'abreuvage (6'), a la forme d'une pièce coudée (32'').

4. Abreuvoir automatique selon revendication 3, caractérisé par le fait que, la valve antiretour (31') est disposé immédiatement avant le point d'abreuvage (6').

5. Abreuvoir automatique selon revendication 3 ou 4, caractérisé par le fait que, la conduite d'aspiration (7') est pourvue d'un accumulateur (35) placé entre son raccord avec la conduite de dérivation (16') et la valve antiretour (31'') qui peut être formé par exemple par un élargissement de la conduite (34).

6. Abreuvoir automatique selon revendication 1 ou 2, caractérisé par le fait que, la valve antiretour (31) placée dans la conduite d'aspiration (7) comme valve de retenue, est constituée de préférence par une soupape d'arrêt à bille placée verticalement.

7. Abreuvoir automatique selon l'une ou plusieurs des revendications 1 à 6, caractérisé par le fait que, en plus du système antiretour (31) formé d'un tuyau coudé (32) ou d'une pièce coudée (32''), une valve de retenue est placée dans la conduite d'aspiration (7), de préférence en dessous du niveau (10) de mélange (I) se trouvant dans le mélangeur (3).

8. Abreuvoir automatique selon l'une ou plusieurs des revendications 1 à 7, caractérisé par le fait que, la conduite de dérivation (16) raccordée au réservoir (20) est équipée d'une valve antiretour (18) placée de préférence en dessous du niveau (21) de mélange (II) se trouvant dans celui-ci.

9. Abreuvoir automatique selon l'une ou plusieurs des revendications 1 à 8, caractérisé par le fait que, le niveau (21') maximum atteint par le liquide dans le réservoir (20') se trouve en dessous du point d'abreuvage (6').

10. Abreuvoir automatique selon l'une ou plusieurs des revendications 1 à 9, caractérisé par le fait que, le point d'abreuvage (6) est équipé d'un suceur (8) pourvu d'un orifice (9).

11. Abreuvoir automatique selon l'une ou plusieurs des revendications 1 à 10, caractérisé par le fait que, une vanne de régulation (19) est placée dans la conduite supplémentaire (17) raccordée au réservoir (20), entre celui-ci et la vanne de fermeture (11).

12. Abreuvoir automatique selon l'une ou plusieurs des revendications 1 à 11, caractérisé par le fait que, la hauteur du réservoir (20; 20') est réglable.

13. Abreuvoir automatique selon l'une ou plusieurs des revendications 1 à 12, caractérisé par le fait que, le réservoir (20) fait office de mélangeur et/ou est équipé d'un système chauffant et/ou d'un système de dosage.

14. Abreuvoir automatique selon l'une ou plusieurs des revendications 1 à 13, caractérisé par le fait que, le mélangeur (3), le réservoir (20), ainsi que la vanne de fermeture (11), sont réunis en une unité modulaire et disposés dans un carter (2) commun et fermé.

## FIG. 1

# FIG. 2

# FIG. 3

FIG. 4